# EUROPEAN PATENT APPLICATION

(11) **EP 0 962 479 A1**
(43) Date of publication of application: **08.12.1999**
(21) Application number: 99304368.6
(22) Date of filing: 04.06.1999
(51) Int. Cl.: C08G 65/26, C10L 1/22

(54) **Derivatized polyether amine and fuel composition containing same**

(30) Priority: 04.06.1998 US 90279
(71) Applicant: TEXACO DEVELOPMENT CORPORATION, White Plains, New York 10650-0001 (US)
(72) Inventor: Russo, Joseph M., Poughkeepsie, New York 12603 (US); DeRosa, Thomas F., Wallingford, Connecticut 06942 (US); Kaufman, Benjamin J., Hopewell Junction, New York 12533 (US); Ketcham, James R., Salt Point, New York 12578 (US); Kessler, Richard V., Wappingers Falls, New York 12590 (US)
(74) Representative: Watkins, David

(57) **Abstract**

A hydrocarbyl polyoxyalkylene aminoalcohol of the general formula 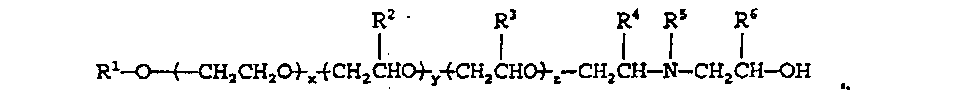 wherein R¹ is an alkyl, an alicyclic or an alkylalicyclic radical having from about 4 to about 30 carbon atoms or an alkylaryl where the alkyl group is from about 4 to about 30 carbon atoms; x is an integer from 0 to about 5, y is an integer from 1 to about 49, z is an integer from 1 to about 49 and the sum of x+y+z is equal to 3 to about 50; R² and R³ each is different and is an alkyl group of from 1 to 4 carbon atoms and each oxyalkylene radical can be any combination of repeating oxyalkylene units to form block or random copolymers; R⁴ is the same as R² or R³; R⁵ is hydrogen or 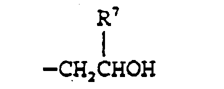 where R⁷ is hydrogen or an alkyl group of from 1 to 5 carbon atoms and R⁶ is hydrogen or an alkyl group of from 1 to 5 carbon atoms and an internal combustion engine fuel composition containing same are provided.

## Description

### BACKGROUND OF THE INVENTION

This invention relates to a hydrocarbyl polyoxyalkylene aminoalcohol and to an internal combustion engine fuel composition containing same.

The combustion of fuel in an internal combustion engine typically results in the formation and accumulation of deposits on various parts of the combustion chamber and on the fuel intake and exhaust systems of the engine. The presence of these deposits in the combustion chamber often result in the following problems: (1) reduction in the operating efficiency of the engine; (2) inhibition in the heat transfer between the combustion chamber and the engine cooling system; and (3) reduction in the volume of the combustion zone which can cause a higher than design compression ratio in the engine. A knocking engine can also result from deposits forming and accumulating in the combustion chamber. A prolonged period of a knocking engine can result in stress fatigue and wear in engine components such as, for example, pistons, connecting rods bearings and cam rods.

The formation and accumulation of intake valve deposits can interfere with valve closing which eventually can result in valve burning. Such deposits can also interfere with valve motion and valve seating which tend to reduce the-volumetric efficiency of the engine and limit the maximum design power.

Deposits can also collect in the tubes and runners that are part of the exhaust gas recirculation (EGR) flow. The collection of these deposits can reduce the EGR flow. This will result in a knocking engine and an increase in nitric oxide emissions.

In view of the foregoing problems associated with the formation and accumulation of deposits in the combustion chamber and fuel intake and exhaust systems of an internal combustion engine, efforts have been made to develop fuel additives which will inhibit the deposition of deposits in the engine. Illustrative of such fuel additives are the amido alkanolamines of U.S. Patent Nos. 5,234,478 and 5,383,942 and the alkylphenoxypolyoxyalkylene amine lactones of U.S. Patent No. 5,527,364.

### SUMMARY OF THE INVENTION

In accordance with the present invention, a hydrocarbyl polyoxyalkylene aminoalcohol is provided which possesses the general formula 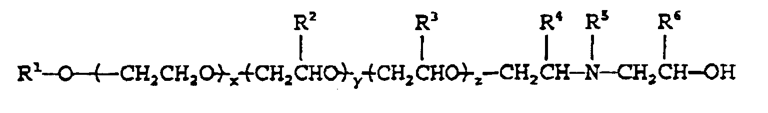 wherein R¹ is an alkyl, an alicyclic or an alkylalicyclic radical having from about 4 to about 30 carbon atoms or an alkylaryl where the alkyl group is from about 4 to about 30 carbon atoms; x is an integer from 0 to about 5, y is an integer from 1 to about 49, z is an integer from 1 to about 49 and the sum of x+y+z is equal to 3 to about 50; R² and R³ each is different and is an alkyl group of from 1 to 4 carbon atoms and each oxyalkylene radical can be any combination of repeating oxyalkylene units to form block or random copolymers; R⁴ is the same as R² or R³; R⁵ is hydrogen or 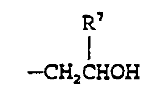 where R⁷ is hydrogen or an alkyl group of from 1 to 5 carbon atoms; and R⁶ is hydrogen or an alkyl group of from 1 to 5 carbon atoms.

It shall be understood herein that the oxyalkylene groups constituting the polyoxyalkylene chain in the foregoing general formula can be in random or block sequence.

Further in accordance with this invention, a method for the preparation of the foregoing hydrocarbyl polyoxyalkylene aminoalcohol is provided which comprises reacting a hydrocarbyl polyoxyalkylene amine of the general formula 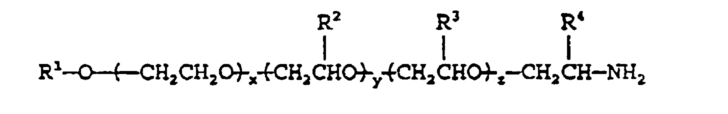 wherein R¹ is an alkyl, an alicyclic or an alkylalicyclic radical having from about 4 to about 30 carbon atoms or an alkylaryl where the alkyl group is from about 4 to about 30 carbon atoms; x is an integer from 0 to about 5, y is an integer from 1 to about 49, z is an integer from 1 to about 49 and the sum of x+y+z is equal to 3 to about 50; R² and R³ each is different and is an alkyl group of from 1 to 4 carbon atoms and each oxyalkylene radical can be any combination of repeating oxyalkylene units to form block or random copolymers; and R⁴ is the same as R² or R³ with a 1,2-epoxide of the general formula 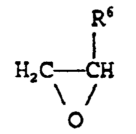 wherein R⁶ is hydrogen or an alkyl group of from 1 to 5 carbon atoms to provide the product hydrocarbyl polyoxyalkylene aminoalcohol of the general formula 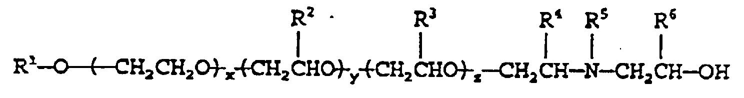 wherein R¹, R², R³, R⁴, R⁶, x, y and z have the aforestated meanings and R⁵ is hydrogen or 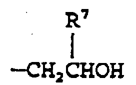 where R⁷ is hydrogen or an alkyl group of from 1 to 5 carbon atoms.

Still further in accordance with the present invention, a fuel composition is provided which comprises a major amount of an internal combustion engine fuel and a fuel combustion deposit-inhibiting amount of at least one hydrocarbyl polyoxyalkylene aminoalcohol of the general formula 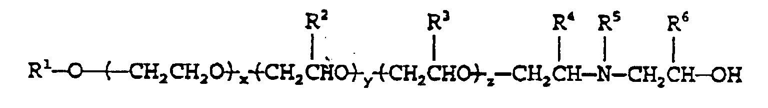 wherein R¹, R², R³, R⁴, R⁵, R⁶, x, y and z have the aforestated meanings.

Yet further in accordance with the present invention, a method for inhibiting the deposition of fuel combustion deposits in an internal combustion engine is provided which comprises operating the engine employing as the fuel therefor a fuel composition which comprises a major amount of an internal combustion engine fuel and a fuel combustion deposit-inhibiting amount of at least one hydrocarbyl polyoxyalkylene aminoalcohol of the general formula 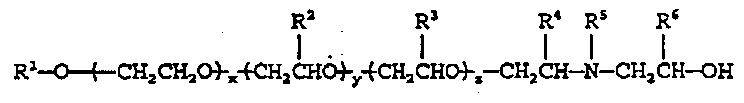 wherein R¹, R², R³, R⁴, R⁵, R⁶, x, y and z have the aforestated meanings.

### DESCRIPTION OF THE PREFERRED EMBODIMENTS

The hydrocarbyl polyoxyalkylene aminoalcohol of this invention possesses the general formula 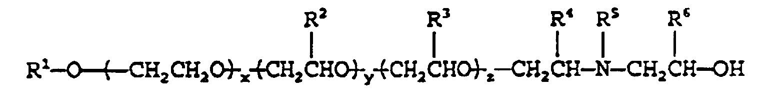 wherein x is an integer from 0 to about 5, y is an integer from 1 to about 49 preferably from about 5 to about 40 and more preferably from about 5 to about 10, z is an integer from 1 to about 49, preferably from about 5 to about 40 and more preferably from about 5 to about 10 and the sum of x+y+z is equal to 3 to about 50; R¹ is an alkyl, an alicyclic or an alkylalicyclic radical having from about 4 to about 30 carbon atoms or an alkylaryl where the alkyl group is from about 4 to about 30 carbon atoms, including, by way of illustration, unsubstituted straight or branched aliphatic, cycloaliphatic and aromatic groups and cycloaliphatic and aromatic groups substituted with one or more straight or branched aliphatic, cycloaliphatic and/or aromatic groups. Thus, for example, R¹ can be represented by the general formula 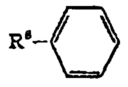 wherein R⁸ is a hydrocarbyl group of from about 4 to about 30 carbon atoms including, by way of example, a monovalent aliphatic radical having from about 6 to about 24 carbon atoms, preferably from about 8 to about 20 carbon atoms and more preferably from about 9 to about 18 carbon atoms. R² and R³ each is different and is an alkyl group of from 1 to 4 carbon atoms and each oxyalkylene radical can be any combination of repeating oxyalkylene units to form block or random copolymers; R⁴ is the same as R² or R³; R⁵ is hydrogen or 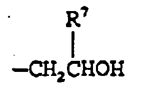 where R⁷ is hydrogen or an alkyl group of from 1 to 5 carbon atoms; and R⁶ is hydrogen or an alkyl group of from 1 to 5 carbon atoms. A preferred hydrocarbyl polyoxyalkylene aminoalcohol for use herein as a fuel additive is represented by the following formula 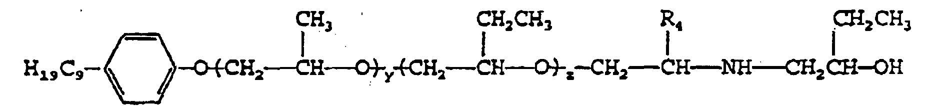 wherein the average value of y is from about 7 to about 8, the average value of z is about half that of y, i.e., from about 3.5 to about 4, with the ratio of y to z being from about 1 to about 3 and preferably from about 1.5 to about 2, and R⁴ is -CH₃ or -CH₂CH₃.

The foregoing hydrocarbyl polyoxyalkylene aminoalcohol of this invention can be obtained by reacting a hydrocarbyl polyoxyalkylene amine of the general formula 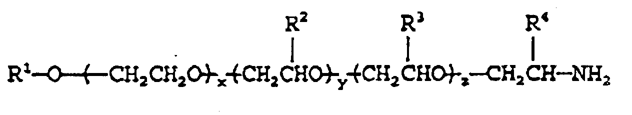 wherein R¹, R², R³, R⁴, x, y and z have the aforestated meanings with a 1,2-epoxide of the general formula 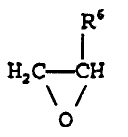 wherein R⁶ has the aforestated meaning.

Representatives of the hydrocarbyl polyoxyalkylene amine are known in the art, e.g., in U.S. Patent Nos. 5,234,478, 5,383,942 and 5,527,364, the contents of which are incorporated by reference herein. In general, the hydrocarbyl polyoxyalkylene amine can be prepared by first reacting an alkylaryl or a hydrocarbyl alcohol represented by the general formula

R¹-OH

wherein R¹ has the aforestated meaning with at least two 1,2-epoxides represented by the general formulae 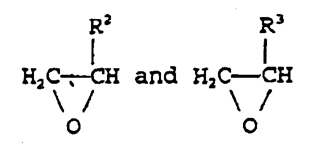 wherein R² and R³ have the aforestated meanings.
Optionally, a small amount of ethylene oxide, e.g., up to about 35 percent, can be added to the foregoing reaction to provide a hydrocarbyl polyoxyalkylene hydroxide represented by the general formula 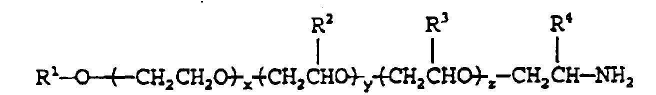 wherein R¹, R², R³, R⁴, x, y and z have the aforestated meanings. Preferred 1,2-epoxides for use herein include, but are not limited to, ethylene oxide, propylene oxide, butylene oxide and the like.

The hydrocarbyl alcohol and the at least two 1,2-epoxides are advantageously reacted to form the hydrocarbyl polyoxyalkylene hydroxide in a mole ratio ordinarily ranging from about 5 to about 30 and preferably from about 10 to about 20. The reaction is ordinarily conducted at a temperature ranging from about 90°C to about 120°C and preferably from about 100°C to about 115°C. The time for preparing the hydrocarbyl polyoxyalkylene hydroxide, under preferred parameters, will generally not exceed 8 hours.

The hydrocarbyl polyoxyalkylene hydroxide is then reacted with ammonia to provide the hydrocarbyl polyoxyalkylene amine. In general, the amount of ammonia reacted with the hydrocarbyl polyoxyalkylene hydroxide will range from about 1.0 cc/min to about 3.0 cc/min and preferably from about 1.5 cc/min to about 2.5 cc/min. The temperature of this reaction will ordinarily range from about 160°C to about 209°C and preferably from about 190°C to about 208°C.

Suitable 1,2-epoxides to react with the hydrocarbyl polyoxyalkylene amine include, but are not limited to, ethylene oxide, propylene oxide, butylene oxide, pentylene oxide, hexylene oxide and heptylene oxide. A preferred 1,2-epoxide for use herein is butylene oxide. Generally, the hydrocarbyl polyoxyalkylene amine and the 1,2-epoxide are advantageously reacted to provide the product hydrocarbyl polyoxyalkylene aminoalcohol. As one skilled in the art will readily appreciate, the reaction of the hydrocarbyl polyoxyalkylene amine with the 1,2-epoxide can provide a monoalkoxylated product or a dialkoxylated product. It is particularly advantageous to provide the monoalkoxylated product as a fuel additive for use herein.

In general, the hydrocarbyl polyoxyalkylene amine is reacted with the 1,2-epoxide in a mole ratio ranging from about 1 to about 50, preferably from about 2 to about 7 and more preferably from about 3 to about 6. The temperature for this reaction will ordinarily range from about 140°C to about 190°C and preferably from about 150°C to about 180°C. The time period for this reaction will typically not exceed 8 hours.

The hydrocarbyl polyoxyalkylene aminoalcohol of this invention is particularly useful as an additive in an internal combustion engine fuel composition to inhibit the deposition of fuel combustion deposits in the combustion chamber and intake valves and exhaust system of an internal combustion engine. Generally, the fuel composition will contain a major amount of an internal combustion engine fuel and an effective fuel combustion deposit-inhibiting amount of at least one hydrocarbyl polyoxyalkylene aminoalcohol of this invention.

Preferred fuel compositions are those intended for, but not limited to, use in spark ignition internal combustion engines. Such fuel compositions, i.e., gasoline base stocks, ordinarily contain a mixture of hydrocarbons boiling in the gasoline boiling range of from about 90°F to about 370°F. This fuel can consist of straight or branched chain paraffins, cycloparaffins, olefins, aromatic hydrocarbons, or mixtures thereof. The fuel can be derived from among others, straight run naphtha, polymer gasoline, natural gasoline, or from catalytically cracked or thermally cracked hydrocarbons and catalytically reformed stock. Generally, the composition and octane level of the fuel are not critical and any conventional fuel can be employed herein.

In general, the amount of the hydrocarbyl polyoxyalkylene aminoalcohol employed in the fuel composition as a fuel additive can range from about 10 to about 2000 pounds per thousand barrels (PTB), preferably from about 20 to about 1000 PTB and more preferably from about 40 PTB to about 300 PTB.

In the fuel composition, other fuel additives can be employed with the additive of this invention, including, for example, antiknock agents such as tetraethyl lead compounds, anti-icing additives, antioxidants, metal deactivators, demulsifiers and the like.

The following examples are illustrative of the preparation of the hydrocarbyl polyoxyalkylene aminoalcohol of this invention and its use as a fuel additive for inhibiting the deposition of fuel combustion deposits in an internal combustion engine.

### Example 1

### A. Preparation of 9.2 Mole Propylene Oxide/5 Mole 1,2 Butylene Oxide Adduct of Nonylphenol.

Into a 10 gallon kettle were charged 4.2 pounds of nonylphenol and 57 grams of 50 percent aqueous potassium hydroxide. The reactor was then purged with prepurified nitrogen. Maintaining a nitrogen purge, the reactor was heated to 100°C and the nonylphenolate salt dried to a water content of less than 0.1 percent using both vacuum and nitrogen stripping. A mixture of 10.3 lbs. propylene oxide and 6.9 lbs. 1,2-butylene oxide was then reacted at 115°C at 90 psig over a six hour period. The reaction mixture was then digested at 115-120°C to an equilibrium pressure and purged with nitrogen for 30 minutes. The alkaline product was then neutralized at 95°C by stirring for two hours with 173 grams Magnesol 30/40 absorbent which was added in an aqueous slurry. The neutralized product was then vacuum stripped to a minimum pressure at 100-120°C, nitrogen stripped and filtered. Properties of the finished product are given in Table I below.

**Table I**

| | Properties |
|---|---|
| Acid no. mg KOH/g | <0.01 |
| Hydroxyl no. mg KOH/g | 56 |
| Water, wt.% | 0.1 max |
| Color, Pt-Co | 150 max |
| Viscosity, 40°C, eST. | 132 |

### B. Preparation of Nonylphenoxypolyoxypropylene/polyoxybutylene amine,

0.127 lb/hr of the product of step A, 0.169 lb/hr of ammonia and 6 L/hr of hydrogen were added to the reactor filled with 455 grams of a Raney nickel catalyst. The reactor was at a pressure of 2750 psig and a temperature of 205°C. The crude reactor effluent was charged to a clean dry kettle. It was then nitrogen stripped to 75°C, placed under vacuum and heated to 100°C. Analysis of the product is given in Table II.

**Table II**

| | meq/gram |
|---|---|
| Total acetylatables | 1.0 |
| Total amine | 0.96 |
| Primary amine | 0.96 |

### C. Preparation of the reaction product of alkylene oxide and Nonylphenoxypolyoxypropylene/polyoxybutylene amine.

To a 1 gallon autoclave equipped with a thermometer, stirrer and nitrogen outlet, 2000 grams of the product of step B and 274 grams of butylene oxide were charged. The mixture was heated to 160°C for a period'of eight hours. As shown in Table III, the final product had the following analysis.

**Table III**

| | meq/gram |
|---|---|
| Total acetylatables | 1.0 |
| Total amine | 0.9 |

The final product, i.e., a monoalkoxylated product, is represented by the following formula 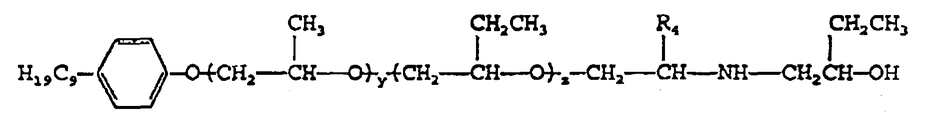 wherein the average value of y is from about 7 to about 8, the average value of z is about half that of y, i.e., from about 3.5 to about 4, and R⁴ is -CH₃ or -CH₂CH₃. While shown as block copolymers, the propylene/butylene oxides can also be random copolymers.

### Example 2

### A. Preparation of 9.2 Mole Propylene Oxide/5 Mole 1,2 Butylene Oxide Adduct of Nonylphenol.

Into a 10 gallon kettle were charged 4.2 pounds of nonylphenol and 57 grams of 50 percent aqueous potassium hydroxide. The reactor was then purged with prepurified nitrogen. Maintaining a nitrogen purge, the reactor was heated to 100°C and the nonylphenolate salt dried to a water content of less than 0.1 percent using both vacuum and nitrogen stripping. A mixture of 10.3 lbs. propylene oxide and 6.9 lbs. 1,2-butylene·oxide was then reacted at 115°C at 90 psig over a six hour period. The reaction mixture was then digested at 115-120°C to an equilibrium pressure and purged with nitrogen for 30 minutes. The alkaline product was then neutralized at 95°C by stirring for two hours with 173 grams Magnesol 30/40 absorbent which was added in an aqueous slurry. The neutralized product was then vacuum stripped to a minimum pressure at 100-120°C, nitrogen stripped and filtered. Properties of the finished product are given in Table IV below.

**Table IV**

| | Properties |
|---|---|
| Acid no. mg KOH/g | <0.01 |
| Hydroxyl no. mg KOH/g | 56 |
| Water, wt.% | 0.1 max |
| Color, Pt-Co | 150 max |
| Viscosity, 40°C, eST. | 132 |

### B. Preparation of Nonylphenoxypolyoxypropylene/polyoxybutylene amine.

0.127 lb/hr of the product of step A, 0.169 lb/hr of ammonia and 6 L/hr of hydrogen were added to the reactor filled with 455 grams of a Raney nickel catalyst. The reactor was at a pressure of 2750 psig and a temperature of 205°C. The crude reactor effluent was charged to a clean dry kettle. It was then nitrogen stripped to 75°C, placed under vacuum and heated to 100°C. Analysis of the product is given in Table V.

**Table V**

| | meq/gram |
|---|---|
| Total acetylatables | 1.0 |
| Total amine | 0.96 |
| Primary amine | 0.96 |

### C. Preparation of the reaction product of alkylene oxide and Nonylphenoxypolyoxypropylene/polyoxybutylene amine.

To a 2 gallon autoclave with a thermometer, stirrer and nitrogen outlet, 2000 grams of the product of step B and 584 grams of butylene oxide were charged. The mixture was heated to 160°C for a period of eight hours. As shown in Table VI, the final product had the following analysis.

**Table VI**

| | meq/gram |
|---|---|
| Total acetylatables | 1.0 |
| Total amine | 0.9 |

The final product, i.e., a dialkoxylated product, is represented by the following formula 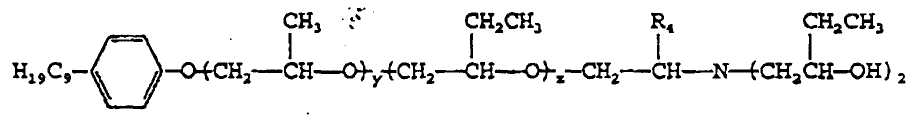 wherein the average value of y is from about 7 to about 8, the average value of z is about half that of y, i.e., from about 3.5 to about 4, and R⁴ is -CH₃ or -CH₂CH₃. While shown as block copolymers, the propylene/butylene oxides can also be random copolymers.

The fuel additive of Examples 1 and 2 were tested as a combustion chamber and intake valve detergent in a fuel composition in comparison to a commercial detergent package in a fuel composition using a Honda Generator Test to demonstrate its effectiveness for inhibiting combustion chamber and intake valve defaults. The additized fuel composition and unadditized fuel composition, i.e, the fuel composition containing the commercial detergent package, are described in Fuel 1 and Fuel 2, respectively.

| FUEL 1 | |
|---|---|
| Test | Characteristics |
| API Gravity 60°F | 55.5 |
| | |
| RVP (psi) | 7.7 |
| | |
| Sulfur (PPM) | 304.0 |
| | |
| Existent Gum, mg (mg/100 ml) Washed | 2.0 |
| | |
| Oxidation Stability Minute | 1440.0 |
| | |
| FIA | |
| Aromatic (vol%) | 33.6 |
| Olefin (vol%) | 12.7 |
| Saturates | 53.7 |
| | |
| ASTM Distillation °F | |
| IBP | 91.4 |
| 5% | 126.8 |
| 10% | 144.4 |
| 20% | 170.6 |
| 30% | 192.3 |
| 40% | 210.5 |
| 50% | 227.3 |
| 60% | 243.8 |
| 70% | 262.9 |
| 80% | 294.0 |
| 90% | 341.0 |
| 95% | 371.3 |
| FBP | 418.4 |
| Loss % | 1.0 |
| Res % | 1.3 |
| Oxygenates | None |

| FUEL 2 | |
|---|---|
| Test | Characteristics |
| API Gravity 60°F | 55.2 |
| | |
| RVP (psi) | 7.6 |
| | |
| Sulfur (PPM) | 310.0 |
| | |
| Existent Gum, mg (mg/100 ml) Washed | 2.0 |
| | |
| Oxidation Stability Minute | 1418.0 |
| | |
| FIA | |
| Aromatic (vol%) | 32.9 |
| Olefin (vol%) | 12.5 |
| Saturates | 54.6 |
| | |
| ASTM Distillation °F | |
| IBP | 87.0 |
| 5% | 123.0 |
| 10% | 144.0 |
| 20% | 177.0 |
| 30% | 199.0 |
| 40% | 215.0 |
| 50% | 228.0 |
| 60% | 240.0 |
| 70% | 256.0 |
| 80% | 287.0 |
| 90% | 344.0 |
| 95% | 375.0 |
| FBP | 423.0 |
| Loss % | 1.4 |
| Res % | 1.1 |
| Oxygenates | None |

### Honda Generator Test

This test was developed to determine (1) the intake valve detergency of an additive and (2) whether the additive will cause the intake valves to stick.

In small two-cylinder gasoline powered engines, the intake valves accumulate large amounts of fuel combustion deposits which interfere with the operation of the engine. A detergent/dispersant is required to prevent the buildup of these deposits. The Honda Generator Test was developed to measure the activity of a fuel additive in preventing the buildup of intake valve deposits (IVD),i.e., keep clean. The measurements were done in the following two ways: (1) the intake valves at the end of the test were rated using the CRC rating, i.e., a valve with a rating of 10 is perfectly clean and a valve with a rating of 6 or less contains heavy deposit levels, and (2) intake valve deposit weights were obtained.

### Test Equipment

The Intake System Deposit/Intake Valve Stickiness Test consisted of an electrical generator driven by a current technology gasoline engine which is similar in many characteristics to modern vehicle engines. The generator set design allowed the engine to be easily loaded by using the electrical generator as a dynamometer for the engine. The set operated at a governed speed of 3600 rpm and incorporated a twin cylinder, overhead camshaft and watercooled engine as described below in Table VII.

**Table VII**

| Engine Data for ES6500 Honda Generator | |
|---|---|
| Type: 4-stroke | Overhead cam, 2 cylinder |
| Cooling System: | Liquid cooled |
| Displacement: | 359 cc |
| Bore x stroke: | 58 x 68 mm |
| Construction: | Aluminum head and block, fixed cast iron cylinder liners |
| Compression: | 8.5:1 |
| Maximum Power: | 9.1 Kw/3600 rpm |
| Maximum Torque: | 240 kg-cm |
| Fuel System: | Carburetor |

The results of these tests are set forth in Table VIII.

**TABLE VIII**

| Honda Generator Intake Tests Results | | | | |
|---|---|---|---|---|
| | Examle 1 | Example 1 | Example 2 | Commercial Additive |
| Dosage PTB | 236 | 188 | 236 | 236 |
| CRC Valve Rating | 9.73 | 9.29 | 8.60 | 9.43 |
| IVD Weight (grams) | 0.0062 | 0.0184 | 0.0801 | 0.0232 |
| stickiness (lbs of push) | 0.00 | 0.60 | 0.60 | 0.00 |

It is readily apparent that the fuel composition containing the fuel additive of Example 1, i.e., the monoalkoxylated product of this invention, at 236 PTB provided excellent CRC ratings with virtually no deposits on the intake valves, i.e., 6.2 mg or less. The fuel composition containing the fuel additive of Example 2, i.e., the dialkoxylated product of this invention, at 236 PTB provided CRC ratings significantly lower than that of the fuel composition containing the fuel additive of Example 1 with a substantially greater amount of deposits on the intake valves, i.e., 80.1 mg. Additionally, the commercial additive package at 236 PTB provided CRC ratings below that of the fuel containing the fuel additive of Example 1 with a substantially greater amount of deposits on the intake valves, i.e., 23.2 mg. Thus, the fuel additive of Example 1, i.e., the monoalkoxylated product of this invention, significantly inhibits the formation of fuel combustion deposits in an internal combustion engine.

## Claims

1. A hydrocarbyl polyoxyalkylene aminoalcohol compound of the general formula 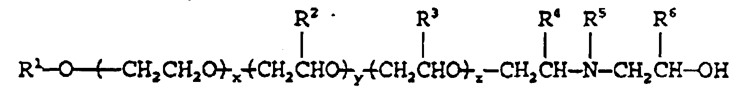 wherein R¹ is an alkyl, an alicyclic or an alkylalicyclic radical having from about 4 to about 30 carbon atoms or an alkylaryl where the alkyl group is from about 4 to about 30 carbon atoms; x is an integer from 0 to about 5, y is an integer from 1 to about 49, z is an integer from 1 to about 49 and the sum of x+y+z is equal to 3 to about 50; R² and R³ each is different and is an alkyl group of from 1 to 4 carbon atoms and each oxyalkylene radical can be any combination of repeating oxyalkylene units to form block or random copolymers; R⁴ is the same as R² or R³; R⁵ is hydrogen or 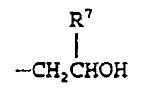 where R⁷ is hydrogen or in alkyl group of from 1 to 5 carbon atoms and R⁶ is hydrogen or an alkyl group of from 1 to 5 carbon atoms.

2. The compound of Claim 1 wherein R¹ is an alkylaryl where the alkyl group is from about 6 to about 24 carbon atoms.

3. The compound of Claim 1 wherein R² is methyl, R³ is ethyl, R⁵ is hydrogen and R⁶ is ethyl.

4. The compound of Claim 3 wherein x is equal to 0 and the ratio of y to z is from about 1.5 to about 2.

5. A method for the preparation of a hydrocarbyl polyoxyalkylene aminoalcohol which comprises reacting a hydrocarbyl polyoxyalkylene amine of'the general formula 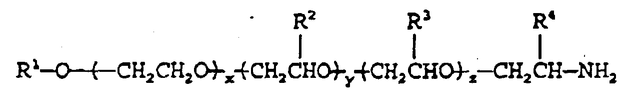 wherein R¹ is an alkyl, an alicyclic or an alkylalicyclic radical having from about 4 to about 30 carbon atoms or an alkylaryl where the alkyl group is from about 4 to about 30 carbon atoms; x is an integer from 0 to about 5, y is an integer from 1 to about 49, z is an integer from 1 to about 49 and the sum of x+y+z is equal to 3 to about 50; R² and R³ each is different and is an alkyl group of from 1 to 4 carbon atoms and each oxyalkylene radical can be any combination of repeating oxyalkylene units to form block or random copolymers; and R⁴ is the same as R² or R³ with a 1,2-epoxide of the general formula 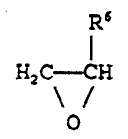 wherein R⁶ is hydrogen or an alkyl group of from 1 to 5 carbon atoms to provide the product hydrocarbyl polyoxyalkylene aminoalcohol of the general formula 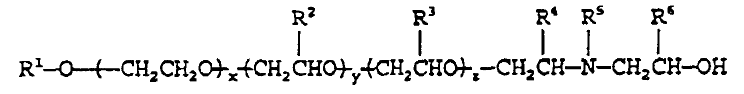 wherein R¹, R², R³, R⁴, R⁶, x, y and z have the aforestated meanings and R⁵ is hydrogen or 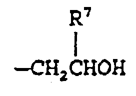 where R⁷ is hydrogen or an alkyl group of from 1 to 5 carbon atoms.

6. The method of Claim 5 wherein R¹ is an alkylaryl where the alkyl group is from about 6 to about 24 carbon atoms.

7. The method of Claim 5 wherein R² is methyl, R³ is ethyl, R⁵ is hydrogen and R⁶ is ethyl.

8. The method of Claim 7 wherein x is equal to 0 and the ratio of y to z is from about 1.5 to about 2.

9. The method of Claim 8 wherein the mole ratio of the hydrocarbyl polyoxyalkylene amine to the 1,2-epoxide is from about 1 to about 10.

10. The method of Claim 8 wherein the reaction temperature is from about 140°C to about 190°C.

11. A fuel composition which comprises a major amount of an internal combustion engine fuel and fuel combustion deposit-inhibiting amount of at least one hydrocarbyl polyoxyalkylene aminoalcohol of the general formula 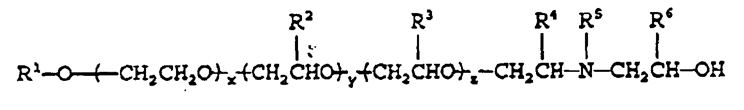 wherein R¹ is an alkyl, an alicyclic or an alkylalicyclic radical having from about 4 to about 30 carbon atoms or an alkylaryl where the alkyl group is from about 4 to about 30 carbon atoms; x is an integer from 0 to about 5, y is an integer from 1 to about 49, z is an integer from 1 to about 49 and the sum of x+y+z is equal to 3 to about 50; R² and R³ each is different and is an alkyl group of from 1 to 4 carbon atoms and each oxyalkylene radical can be any combination of repeating oxyalkylene units to form block or random copolymers; R⁴ is the same as R² or R³; R⁵ is hydrogen or 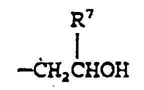 where R⁷ is hydrogen or an alkyl group of from 1 to 5 carbon atoms and R⁶ is hydrogen or an alkyl group of from 1 to 5 carbon atoms.

12. The fuel composition of Claim 11 wherein R¹ is an alkylaryl where the alkyl group is from about 6 to about 24 carbon atoms.

13. The fuel composition of Claim 11 wherein R² is methyl, R³ is ethyl, R⁵ is hydrogen and R⁶ is ethyl.

14. The fuel composition of Claim 13 wherein x is equal to 0 and the ratio of y to z is from about 1.5 to about 2.

15. The fuel composition of Claim 14 wherein the hydrocarbyl polyoxyalkylene aminoalcohol is present in an amount from about 10 PTB to about 2000 PTB.

16. The fuel composition of Claim 14 wherein the hydrocarbyl polyoxyalkylene aminoalcohol is present in an amount from about 40 PTB to about 300 PTB.

17. A method for inhibiting the deposition of fuel combustion deposits in an internal combustion engine which comprises operating the engine employing as a fuel therefor a fuel composition which comprises a major amount of an internal combustion engine fuel and a fuel combustion deposit-inhibiting amount of at least one hydrocarbyl polyoxyalkylene aminoalcohol of the general formula 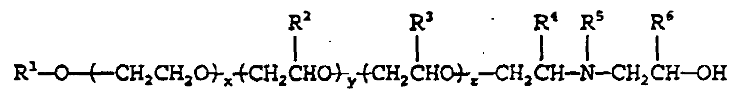 wherein R¹ is an alkyl, an alicyclic or an alkylalicyclic radical having from about 4 to about 30 carbon atoms or an alkylaryl where the alkyl group is from about 4 to about 30 carbon atoms; x is an integer from 0 to about 5, y is an integer from 1 to about 49, z is an integer from 1 to about 49 and the sum of x+y+z is equal to 3 to about 50; R² and R³ each is different and is an alkyl group of from 1 to 4 carbon atoms and each oxyalkylene radical can be any combination of repeating oxyalkylene units to form block or random copolymers; and R⁴ is the same as R² or R³; R⁵ is hydrogen or 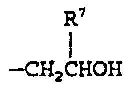 where R⁷ is hydrogen or an alkyl group of from 1 to 5 carbon atoms and R⁶ is hydrogen or an alkyl group of from 1 to 5 carbon atoms.

18. The method of Claim 17 wherein R¹ is a alkylaryl where the alkyl group is from about 6 to about 24 carbon atoms.

19. The method of Claim 17 wherein R² is methyl, R³ is ethyl, R⁵ is hydrogen and R⁶ is ethyl.

20. The method of Claim 19 wherein x is equal to 0 and the ratio of y to z is from about 1.5 to about 2.

21. The method of Claim 20 wherein the hydrocarbyl polyoxyalkylene aminoalcohol is present in an amount from about 10 PTB to about 2000 PTB.

22. The method of Claim 20 wherein the hydrocarbyl polyoxyalkylene aminoalcohol is present in an amount from about 40 PTB to about 300 PTB.
